# EUROPÄISCHE PATENTANMELDUNG

(11) **EP 4 375 557 A1**
(43) Veröffentlichungstag der Anmeldung: **29.05.2024**
(21) Anmeldenummer: 23212166.5
(22) Anmeldetag: 27.11.2023
(51) Int. Cl.: F16L 55/027, F16L 55/033, G10K 11/172

(54) **ROHRSCHALLDÄMPFER SOWIE BAUSATZ UND VERFAHREN ZU SEINER HERSTELLUNG**

(30) Priorität: 28.11.2022 DE 102022212686
(71) Anmelder: Fraunhofer-Gesellschaft zur Förderung der angewandten Forschung e.V., 80686 München (DE)
(72) Erfinder: LÜHRING, Andreas, 28359 Bremen (DE); ROHLFING, Jens, 70569 Stuttgart (DE); TROLL, Agostino, 70569 Stuttgart (DE)
(74) Vertreter: Friese Goeden Patentanwälte PartGmbB

(57) **Zusammenfassung**

Rohrschalldämpfer (5), aufweisend zumindest einen Strömungspfad (55) und einen Resonator, welcher mit dem Strömungspfad gekoppelt ist, wobei der Rohrschalldämpfer in zumindest einem Abschnitt aus einer Mehrzahl von ringförmigen Modulen (1, 2, 3, 4) zusammengesetzt ist, welche jeweils einen Längsabschnitt des Rohrschalldämpfers (5) bilden, wobei zumindest ein erstes ringförmiges Modul (1) eine toroidale Grundform aufweist, welche einen rinnenförmigen, polygonalen Querschnitt besitzt, wobei die innere Seitenfläche (11) der Grundform einen Teil der Wandung des Strömungspfades (55) bildet und in der inneren Seitenfläche (11) eine Öffnung (115) angeordnet ist, wobei zumindest eines der ringförmigen Module (1, 2, 3, 4) weiterhin ein Trennelement (15, 35, 45) aufweist.

Weiterhin betrifft die Erfindung eine Lüftungsanlage oder Feuerstätte mit einem Rohrschalldämpfer sowie einen Bausatz und ein Verfahren zur Herstellung eines Rohrschalldämpfers.

## Beschreibung

Die Erfindung betrifft einen Rohrschalldämpfer, aufweisend zumindest einen Strömungspfad, welcher von einem ersten Ende des Rohrschalldämpfers zu einem zweiten Ende des Rohrschalldämpfers verläuft und zumindest einen Resonator, welcher mit dem Strömungspfad gekoppelt ist. Weiterhin betrifft die Erfindung einen Bausatz und ein Verfahren zur Herstellung eines solchen Rohrschalldämpfers.

Aus der JP H 1193670 A ist ein Schalldämpfer bekannt, welcher den Luftstrom eines Lüfterrades lenkt und dabei auftretende Geräusche dämpft. Dieser bekannte Rohrschalldämpfer weist eine Mehrzahl von Resonatoren auf, welche konzentrisch zur Luftführung angeordnet sind und welche eine Länge aufweisen, welche ein Viertel der Wellenlänge der unerwünschten Schallemissionen entspricht. Hierdurch kann Luftschall effektiv unterdrückt werden, insbesondere bei niedrigen Frequenzen.

Dieser bekannte Rohrschalldämpfer weist jedoch den Nachteil auf, dass eine Abstimmung der Resonanzfrequenz und damit der schalldämpfenden Eigenschaften auf unterschiedliche Einsatzzwecke nur mit hohem konstruktiven Aufwand möglich ist. Ausgehend vom Stand der Technik liegt der Erfindung somit die Aufgabe zugrunde, einen Rohrschalldämpfer anzugeben, welcher einfach und kostengünstig auf unterschiedliche Anwendungsfälle eingestellt werden kann, insbesondere im Bauwesen.

Die Aufgabe kann durch einen Rohrschalldämpfer gemäß Anspruch 1, eine Lüftungsanlage oder Feuerstätte gemäß Anspruch 9, einen Bausatz gemäß Anspruch 10 sowie ein Verfahren gemäß Anspruch 12 gelöst werden. Vorteilhafte Weiterbildungen der Erfindung finden sich in den Unteransprüchen.

Gemäß einem Aspekt der Erfindung wird ein Rohrschalldämpfer vorgeschlagen, welcher zumindest einen Strömungspfad aufweist. Der Strömungspfad ist dazu eingerichtet und bestimmt, bei Betrieb des Rohrschalldämpfers von einem Gasstrom durchströmt zu werden. Der Gasstrom kann beispielsweise ein Frischluftstrom einer Lüftungs- oder Klimaanlage sein. In anderen Ausführungsformen der Erfindung kann der Gasstrom ein Abluftstrom einer Lüftungs- oder Klimaanlage sein. In wiederum anderen Ausführungsformen der Erfindung kann der Gasstrom ein Abgasstrom sein, beispielsweise einer Feuerungsanlage, einer Heizungsanlage oder eines Industrieofens. Der Rohrschalldämpfer ist dazu eingerichtet und bestimmt, Schallenergie aus dem im Strömungspfad strömenden Gasstrom zu entnehmen, sodass unerwünschte Schallausbreitung vermieden oder reduziert wird, beispielsweise in einem Gebäude oder auch in die Umwelt.

Der erfindungsgemäße Rohrschalldämpfer weist eine gestreckte, beispielsweise zylindrische oder quaderförmige Grundform auf, sodass der Strömungspfad sich von einem ersten Ende des Rohrschalldämpfers zu einem zweiten Ende des Rohrschalldämpfers erstreckt. Am ersten und/oder am zweiten Ende kann eine optionale Rohrleitung angebracht sein, welche bei Betrieb des Rohrschalldämpfers den Gasstrom in den Strömungspfad einleitet bzw. den Gasstrom am Ende des Rohrschalldämpfers zu einem gewünschten Endpunkt weiterleitet. In einigen Ausführungsformen der Erfindung kann der Rohrschalldämpfer unmittelbar auf eine Geräuschquelle aufgesetzt werden, beispielsweise eine Feuerungsanlage oder eine Lüftungsanlage. In diesem Fall kann eine zum ersten Ende des Rohrschalldämpfers führende Leitung auch entfallen. In einigen Ausführungsformen der Erfindung kann der Rohrschalldämpfer am Ende einer Leitung angeordnet sein, sodass der Gasstrom unmittelbar am zweiten Ende des Rohrschalldämpfers austritt und dort keine weitere, vom zweiten Ende wegführende Leitung angeordnet ist.

Der Rohrschalldämpfer kann zumindest einen Resonator enthalten, welcher mit dem Strömungspfad gekoppelt ist. Schallemmitierende, d. h. schwingende Gasströme können somit einen Teil der Schwingungsenergie in den Resonator einkoppeln, sodass die Energie dort dissipiert und die weitere Schallausbreitung reduziert oder verhindert wird. Zu diesem Zweck kann der Resonator auf eine gewünschte Resonanz-frequenz abgestimmt sein. Die Resonanzfrequenz kann so gewählt sein, dass Schall mit der Resonanzfrequenz bzw. einem Vielfachen der Resonanzfrequenz besonders effektiv gedämpft wird. Hierzu kann der Resonator eine Länge aufweisen, welche einem Viertel der Wellenlänge der störenden Frequenzen entspricht.

In einigen Ausführungsformen der Erfindung kann der Rohrschalldämpfer bzw. der Resonator in zumindest einem Längsabschnitt aus einer Mehrzahl von ringförmigen Modulen zusammengesetzt sein, welche jeweils einen Längsabschnitt des Rohrschalldämpfers bilden. Somit können die Eigenschaften des Rohrschalldämpfers durch Hinzufügen oder Entfernen von ringförmigen Modulen beeinflusst werden, sodass die Resonanzfrequenz und/oder die Dämpfung bei einer bestimmten, vorgebbaren Frequenz oder einem vorgebbaren Frequenzbereich einstellbar ist. Der vorgeschlagene Rohrschalldämpfer kann somit an eine spezielle Anwendung angepasst werden, beispielsweise eine spezielle Lüftungsanlage oder eine spezielle Feuerungsanlage. Dies ermöglicht insbesondere bei Projekten, welche nicht mehrfach realisiert werden, eine größtmögliche Flexibilität.

Dabei kann zumindest ein erstes ringförmiges Modul eine toroidale Grundform aufweisen, welche einen rinnenförmigen, polygonalen Querschnitt mit einer inneren Seitenfläche und einer äußeren Seitenfläche und eine die Seitenflächen verbindenden Bodenfläche besitzt. Die toroidale Grundform der ringförmigen Module lässt sich durch eine Rotationsfläche darstellen, die man erhält, indem man ein Polygon um eine Achse rotieren lässt, die in der Ebene des Polygons liegt und das Polygon nicht schneidet. In einigen Ausführungsformen ist die Achse parallel zu einer ersten Seitenkante des Polygons und/oder orthogonal zu einer zweiten Seitenkante des Polygons. In einigen Ausführungsformen der Erfindung ist das Polygon ein Viereck, insbesondere ein Rechteck.

Die innere Seitenfläche kann dabei einen Teil der Wandung des Strömungspfades bilden. Die dem Strömungspfad gegenüberliegende Seite der inneren Seitenfläche, die äußere Seitenfläche sowie die Bodenfläche bilden zusammen mit der Bodenfläche eines benachbarten ringförmigen Moduls zumindest einen Resonator, welcher sich radial um den Strömungspfad erstreckt. Zur Kopplung des Resonators mit dem Strömungspfad kann in der inneren Seitenfläche zumindest eine Öffnung angeordnet sein. Somit können die inneren und äußeren Seitenflächen in einigen Ausführungsformen der Erfindung konzentrisch zueinander und konzentrisch zum Strömungspfad angeordnet sein. Hierdurch weist der Resonator einen konstanten Querschnitt auf. In anderen Ausführungsformen der Erfindung kann der Strömungspfad außerhalb der Symmetrieachse des ringförmigen Modules angeordnet sein. Ebenso müssen die inneren und äußeren Seitenflächen nicht zwingend konzentrisch zueinander angeordnet sein, sodass der Resonator auch einen entlang seiner Länge variablen Querschnitt aufweisen kann.

Durch Kombinieren einer unterschiedlichen Anzahl von ringförmigen Modulen kann somit ein längerer oder kürzerer Strömungspfad und eine größere oder geringere Anzahl von Resonatoren realisiert werden, um auf diese Weise die zur Schalldämpfung erforderlichen Übertragungsverluste des Rohrschalldämpfers an unterschiedliche Anwendungsfälle anzupassen.

In einigen Ausführungsformen der Erfindung kann der Rohrschalldämpfer weiterhin zumindest ein zweites ringförmiges Modul aufweisen, welches eine toroidale Grundform aufweist und einen rinnenförmigen, polygonalen Querschnitt mit einer inneren Seitenfläche und einer äußeren Seitenfläche und eine die Seitenflächen verbindende Bodenfläche besitzt, wobei in der inneren Seitenfläche eine Öffnung angeordnet ist und ein Längsabschnitt der inneren Seitenfläche eine Einsteckmuffe zur Befestigung einer Rohrleitung bildet. Ein solches zweites ringförmiges Modul eignet sich insbesondere als Endmodul, welches am ersten oder zweiten Ende des Rohrschalldämpfers eingesetzt werden kann, um die einfache Integration in eine Rohrleitung oder ein Leitungssystem ermöglicht.

In einigen Ausführungsformen der Erfindung kann der Rohrschalldämpfer zumindest ein optionales drittes ringförmiges Modul enthalten, welches eine toroidale Grundform aufweist, welche einen L-förmigen Querschnitt mit einer inneren Seitenfläche und einer hierzu orthogonalen Bodenfläche besitzt, wobei zumindest ein Längsabschnitt der inneren Seitenfläche dazu eingerichtet ist, eine Einsteckmuffe zu bilden oder in eine Einsteckmuffe einer Rohrleitung eingeführt zu werden. Ein solches drittes Modul eignet sich insbesondere als Endmodul, welches am ersten Ende oder am zweiten Ende des Rohrschalldämpfers eingesetzt werden kann und welches den Anschluss an eine Rohrleitung oder ein Leitungsnetz ermöglicht.

In einigen Ausführungsformen der Erfindung enthält der Rohrschalldämpfer weiterhin zumindest ein viertes ringförmiges Modul, welches eine toroidale Grundform aufweist und welches einen rinnenförmigen, polygonalen Querschnitt mit einer inneren Seitenfläche und einer äußeren Seitenfläche und einer die Seitenflächen verbindenden Bodenfläche besitzt, wobei die innere Seitenfläche einen Teil der Wandung des Strömungspfades bildet und in der Bodenfläche eine Öffnung angeordnet ist. Das vierte Modul ermöglicht somit eine Ankopplung an den Resonator eines ersten oder zweiten Moduls, sodass die Resonatorlänge verlängert und die Resonanzfrequenz hin zu größeren Wellenlängen und niedrigeren Frequenzen verschoben werden kann. Hierdurch kann die Flexibilität des vorgeschlagenen Rohrschalldämpfers weiter vergrößert werden.

Erfindungsgemäß weist das erste, das dritte und/oder das vierte ringförmige Modul weiterhin ein Trennelement auf, welches auf der den Seitenflächen gegenüberliegenden Seite der Bodenfläche angeordnet ist. Beim Zusammenfügen zweier ringförmiger Module greift somit das Trennelement eines Moduls in den rinnenförmigen Querschnitt eines benachbarten Moduls ein. In einigen Ausführungsformen der Erfindung ist das Trennelement plattenförmig. In einigen Ausführungsformen der Erfindung verläuft der Normalenvektor des Trennelementes tangential zur toroidalen Grundform. Hierdurch wird der Resonator eines Moduls in zwei Teilresonatoren unterteilt. In Abhängigkeit der Lage des Trennelementes können beide Teilresonatoren gleiche Länge und damit gleiche Resonanzfrequenz oder unterschiedliche Länge und unterschiedliche Resonanzfrequenz aufweisen. Bei der Montage des Rohrschalldämpfers kann somit durch einfaches Anpassen der Winkelbeziehung benachbarter ringförmiger Module ein unterschiedliches Dämpfungs- bzw. Absorptionsverhalten realisiert werden.

In einigen Ausführungsformen der Erfindung kann der rinnenförmige, polygonale Querschnitt viereckig sein. Hierdurch kann der Rohrschalldämpfer eine kompaktere Bauweise aufweisen und/oder die Montage vereinfacht sein.

In einigen Ausführungsformen der Erfindung können die ringförmigen Module des Rohrschalldämpfers an ihren Kontaktflächen ein Nut- und Federsystem aufweisen. Dies ermöglicht eine mechanisch stabile und optional auch luftdichte Verbindung benachbarter Module, wodurch die Leistung des Rohrschalldämpfers erhöht sein kann.

In einigen Ausführungsformen der Erfindung kann zwischen die ringförmigen Module an deren Kontaktflächen ein Dichtmaterial eingesetzt sein. Hierdurch kann die Leistungsfähigkeit des Rohrschalldämpfers weiter erhöht sein, da Leckagen vermieden werden, welche die Resonatorgüte verschlechtern und/oder die Resonanzfrequenz verändern.

In einigen Ausführungsformen der Erfindung kann an der inneren Seitenfläche und/oder der äußeren Seitenfläche und/oder der Bodenfläche eines Moduls eine Nut zur Aufnahme des Trennelementes eines benachbarten Moduls angeordnet sein. Eine solche Nut kann beispielsweise eine Abdichtung des Trennelementes im Resonator erleichtern oder ermöglichen. Darüber hinaus können eine Mehrzahl von Nuten in vorgebbaren Abständen angeordnet sein, um auf diese Weise eine Positionierhilfe bei der Endmontage des Rohrschalldämpfers aus mehreren ringförmigen Modulen erleichtern. Der Abstand einer Mehrzahl von Nuten kann beispielsweise zwischen etwa 5° und etwa 20° oder zwischen etwa 8° und etwa 12° gewählt sein.

In einigen Ausführungsformen der Erfindung kann zumindest ein ringförmiges Modul in einem Spritzgussverfahren oder in einem Druckgussverfahren hergestellt sein. Auf diese Weise lässt sich eine Mehrzahl ringförmiger Module mit hoher Maßhaltigkeit und gleichwohl kostengünstig herstellen. Aus diesen ringförmigen Modulen können Rohrschalldämpfer mit den gewünschten Eigenschaften in einfacher Weise zusammengebaut werden.

In einigen Ausführungsformen der Erfindung kann zumindest ein ringförmiges Modul ein Polymer oder ein Metall oder eine Legierung enthalten oder daraus bestehen. Dabei weisen Polymere den Vorteil auf, besonders leichtgewichtig und kostengünstig zu sein, sodass hierdurch Rohrschalldämpfer für raumlufttechnische Anlagen mit geringem Aufwand herstellbar sind. Sofern die Module aus metallischen Werkstoffen hergestellt sein, beispielsweise einer Aluminiumlegierung, eignen sich diese auch für höhere Einsatztemperaturen in Heizungs- oder Industrieanlagen, um so die von Abgasströmen ausgehenden Geräusche zu dämpfen.

In einigen Ausführungsformen der Erfindung kann ein Rohrschalldämpfer zwischen zwei und etwa 30 erste ringförmige Module enthalten, welche optional mit einem zweiten ringförmigen Modul am zweiten Ende des Rohrschalldämpfers und einem dritten ringförmigen Modul am ersten Ende des Rohrschalldämpfers kombiniert sind. In einigen Ausführungsformen der Erfindung können darüber hinaus zwischen etwa zwei und etwa 30 vierte ringförmige Module vorhanden sein, um die Resonanzfrequenz zu tieferen Frequenzen hin abzustimmen. Es ist jedoch darauf hinzuweisen, dass ein zweites, ein drittes oder ein viertes ringförmiges Modul optional ist und in einigen Ausführungsformen der Erfindung auch entfallen kann.

Gemäß einem Aspekt der Erfindung wird ein Bausatz zur Herstellung eines Rohrschalldämpfers vorgeschlagen, wobei der Bausatz zumindest eine Mehrzahl erster ringförmiger Module enthält, wie diese vorstehend beschrieben wurden. In einigen Ausführungsformen der Erfindung kann der Bausatz darüber hinaus auch mindestens ein zweites ringförmiges Modul und/oder zumindest ein drittes ringförmiges Modul und/oder zumindest ein viertes ringförmiges Modul enthalten. Darüber hinaus kann der Bausatz optional Dichtungselemente und/oder einen Klebstoff und/oder Spannelemente enthalten, um eine Mehrzahl ringförmiger Module in einer vorgebbaren Winkelbeziehung und Reihenfolge zusammenzufügen, um auf diese Weise einen Rohrschalldämpfer mit vorgebbaren Eigenschaften zu erhalten.

In einigen Ausführungsformen der Erfindung kann der Bausatz unterschiedliche zweite und dritte ringförmige Module enthalten, welche für unterschiedliche Rohrdurchmesser und/oder unterschiedliche Leitungssysteme aus Metall oder Kunststoff den jeweiligen Anschluss herstellen. Bei den genannten Rohrsystemen aus Metall oder Kunststoff kann es sich um gängige, in der technischen Gebäudeausrüstung verwendete Rohre handeln.

Gemäß einem Aspekt der Erfindung betrifft diese ein Verfahren zur Herstellung eines Rohrschalldämpfers mit den nachfolgend beschriebenen Schritten. Zunächst wird eine Mehrzahl von ersten, zweiten und dritten ringförmigen Modulen bereitgestellt, beispielsweise in Form eines Bausatzes. Optional können unterschiedliche zweite und dritte ringförmige Module bereitgestellt werden, welche jeweils Einsteckmuffen bzw. Anschlussteile an unterschiedliche Rohrdurchmesser und/oder Rohrformen bieten. Darüber hinaus können optional auch vierte ringförmige Module bereitgestellt werden.

Sodann wird eine vorgebbare Anzahl von ringförmigen Modulen ausgewählt, beispielsweise ein zweites Modul, ein drittes Modul und eine vorgebbare Anzahl erster Module. Die ausgewählten ringförmigen Module werden gestapelt, sodass diese jeweils einen Längsabschnitt des Rohrschalldämpfers bilden. Optional kann jeweils ein relativer Drehwinkel zwischen den benachbarten Modulen ausgewählt und eingestellt werden.

In einigen Ausführungsformen der Erfindung können zwischen benachbarten ringförmigen Modulen Dichtungselemente eingebracht werden. In anderen Ausführungsformen der Erfindung können benachbarte ringförmige Module bei der Montage miteinander verschweißt oder verklebt werden. Hierdurch kann der Rohrschalldämpfer mechanisch robust und luftdicht ausgeführt werden.

In einigen Ausführungen der Erfindung kann die Anzahl und/oder die Art und/oder der relative Montagewinkel der ringförmigen Module anhand einer Computersimulation oder einer Tabelle bestimmt werden. Hierdurch kann ein Rohrschalldämpfer mit vorgebbaren Eigenschaften erhalten werden.

Nachfolgend soll die Erfindung anhand von Figuren ohne Beschränkung des allgemeinen Erfindungsgedankens näher erläutert werden. Dabei zeigt
- Figur 1: eine erste Ansicht einer Ausführungsform eines Rohrschalldämpfers.
- Figur 2: zeigt eine zweite Ansicht einer Ausführungsform eines Rohrschalldämpfers.
- Figur 3: zeigt ein erstes ringförmiges Modul.
- Figur 4: zeigt optional verwendbare vierte ringförmige Module.
- Figur 5: illustriert den Einfluss unterschiedlicher Montagewinkel benachbarter Module in einer ersten Darstellung.
- Figur 6: illustriert den Einfluss unterschiedlicher Montagewinkel benachbarter Module in einer zweiten Darstellung.
- Figur 7: illustriert die Wirkung eines optionalen vierten Moduls.
- Figur 8: zeigt das Verhalten eines Rohrschalldämpfers aus 15 ersten Modulen mit gleichem Montagewinkel.
- Figur 9: zeigt das Verhalten eines Rohrschalldämpfers aus 15 ersten Modulen mit unterschiedlichem Montagewinkel.

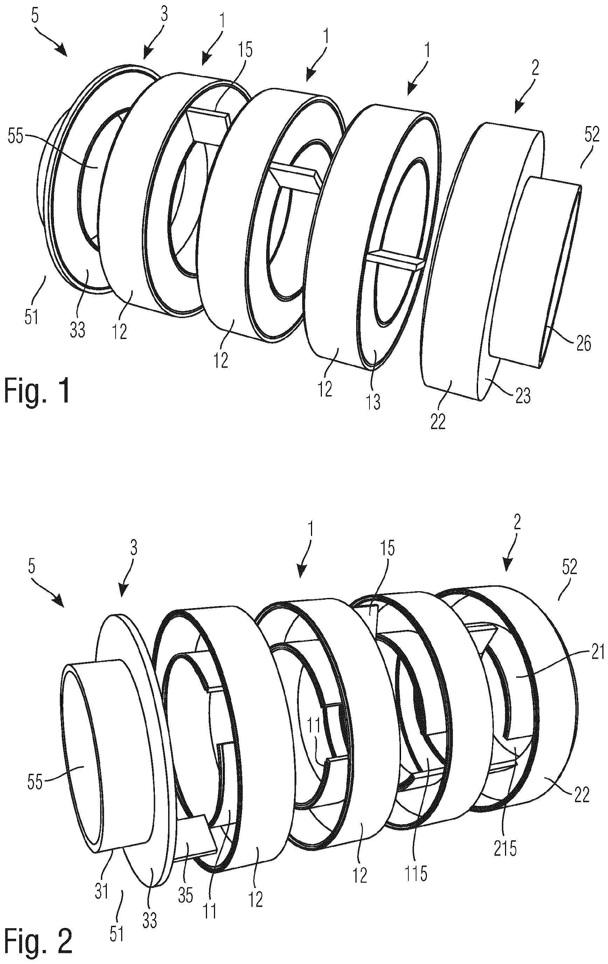

Anhand der Figuren 1 und 2 wird das Grundprinzip des beschriebenen Rohrschalldämpfers 5 näher erläutert. Die Figuren 1 und 2 zeigen jeweils eine Explosionsdarstellung des Rohrschalldämpfers 5, wobei Figur 1 eine Ansicht vom zweiten Ende 52 und Figur 2 eine Darstellung vom ersten Ende 51 illustriert. Gleiche Bestandteile der Erfindung sind in den Figuren mit gleichen Bezugszeichen versehen.

Wie aus Figur 1 und Figur 2 ersichtlich ist, enthält der Rohrschalldämpfer 5 ein drittes Modul 3, welches am ersten Ende 51 des Rohrschalldämpfers 5 angeordnet ist. Weiterhin enthält der Rohrschalldämpfer 5 ein zweites Modul 2, welches am zweiten Ende 52 des Rohrschalldämpfers 5 angeordnet ist. Dazwischen befindet sich eine Mehrzahl erster Module 1. Im dargestellten Ausführungsbeispiel sind drei erste Module 1 verwendet. In anderen Ausführungsformen der Erfindung kann die Anzahl erster Module größer oder kleiner sein und vorteilhaft zwischen 0 und etwa 30 betragen.

Im betriebsfähigen Zustand sind die gezeigten fünf Module so aneinandergefügt, dass sich benachbarte Module an deren Anlageflächen berühren. Die Module können durch Kleben, Schweißen oder Klemmen miteinander verbunden sein. Optional kann sich zwischen benachbarten Modulen ein Dichtelement befinden.

Die Module begrenzen in ihrem Inneren einen Strömungspfad 55, durch welchen ein Gasstrom geleitet wird, dessen Schwingungen bzw. Luftschall vom vorgeschlagenen Rohrschalldämpfer 5 gedämpft werden sollen, um Geräuschbelästigungen der Umgebung zu vermeiden. Im Strömungspfad 55 kann beispielsweise ein Zu- oder Abluftstrom einer Lüftungs- oder Klimaanlage geführt werden. In anderen Ausführungsformen der Erfindung kann im Strömungspfad 55 ein Abgasstrom einer Heizungsanlage oder einer Industrieanlage geführt werden.

Am ersten Ende 51 befindet sich ein drittes ringförmiges Modul 3, welches eine toroidale Grundform aufweist, welche einen L-förmigen Querschnitt mit einer inneren Seitenfläche 31 und einer hierzu orthogonalen Bodenfläche 33 besitzt. Zumindest ein Längsabschnitt der inneren Seitenfläche 31 ist dazu eingerichtet und bestimmt, mit einer Rohrleitung verbunden zu werden. Beispielsweise kann die innere Seitenfläche 31 als Einsteckmuffe ausgeführt sein, in welcher eine Rohrleitung eingesteckt werden kann. Alternativ kann die innere Seitenfläche 31 selbst in eine Einsteckmuffe einer Rohrleitung eingeführt werden. Die Rohrleitung kann beispielsweise ein KG-Rohr, ein HT-Rohr, ein Wickelfalzrohr oder ein anderes, in der technischen Gebäudeausrüstung gebräuchliches Rohr sein.

In ähnlicher Weise befindet sich am zweiten Ende 52 des Rohrschalldämpfers 5 ein zweites ringförmiges Modul 2, welches eine toroidale Grundform aufweist. Das zweite ringförmige Modul 2 besitzt einen rinnenförmigen, polygonalen Querschnitt mit einer inneren Seitenfläche 21 und einer äußeren Seitenfläche 22 und eine die Seitenflächen verbindenden Bodenfläche 23. Wie in Figur 2 ersichtlich ist, ist in der inneren Seitenfläche 21 eine Öffnung 215 eingebracht, welche eine Ankopplung der im zweiten ringförmigen Modul 2 ausgebildeten Rinne an den Strömungspfad 55 ermöglicht.

Wie Figur 1 zeigt, weist das zweite ringförmige Modul 2 an seiner dem Rohrschalldämpfer 5 abgewandten Seite eine Einsteckmuffe 26 zur Befestigung einer Rohrleitung auf. Wie bereits in Zusammenhang mit dem dritten ringförmigen Modul 3 beschrieben, kann die Einsteckmuffe 26 entweder dazu eingerichtet sein, ein Rohrende aufzunehmen oder selbst in die Muffe einer Rohrleitung eingesteckt werden. Auf diese Weise kann der Rohrschalldämpfer 5 beidseitig in eine Rohrleitung eingefügt werden.

Weiterhin befindet sich im Rohrschalldämpfer eine Mehrzahl erster ringförmiger Module 1, welche jeweils einen Längsabschnitt des Rohrschalldämpfers 5 bilden. Jedes der ringförmigen Module 1 weist eine toroidale Grundform auf, welche einen rinnenförmigen, polygonalen Querschnitt mit einer inneren Seitenfläche 11 und einer äußeren Seitenfläche 12 und einer die Seitenfläche 11 und 12 verbindenden Bodenfläche 13 besitzt. Auch im Fall des ersten ringförmigen Moduls 1 bildet die innere Seitenfläche 11 einen Teil der Wandung des Strömungspfades 55 und weist eine Öffnung 115 zum Strömungspfad 55 auf.

Beim Fügen der ringförmigen Module bildet eine Bodenfläche 13 eines Moduls den Deckel eines benachbarten ersten oder des zweiten Moduls, sodass die jeweiligen Rinnen einen geschlossenen Resonator formen. Da der Resonator über die Öffnungen 115 bzw. 215 an den Strömungspfad 55 ankoppeln, bilden diese jeweils einen Resonanzschalldämpfer für das im Strömungspfad 55 strömende gasförmige Medium.

Die Figuren 1 und 2 zeigen weiter, dass die ersten ringförmigen Module 1 und das dritte ringförmige Modul 3 jeweils ein Trennelement 15 bzw. 35 aufweisen, welches auf der den Seitenflächen 11 und 12 gegenüberliegenden Seite der Bodenfläche 13 angeordnet ist. Hierdurch greift das Trennelement 15 bzw. 35 in die rinnenförmige Vertiefung des benachbarten ringförmigen Moduls ein. Hierdurch kann das Trennelement den Resonator eines ringförmigen Moduls in zwei Teilresonatoren unterteilen. In Abhängigkeit der Winkelbeziehung zwischen benachbarten Modulen weisen beide Teilresonatoren die gleiche Länge und damit die gleiche Resonanzfrequenz auf oder eine unterschiedliche Länge und eine unterschiedliche Resonanzfrequenz. Hierdurch kann bei der Endmontage des Rohrschalldämpfers durch Festlegen der Winkelbeziehung das Absorptionsverhalten des Rohrschalldämpfers verändert werden, wie nachfolgend beschrieben wird.

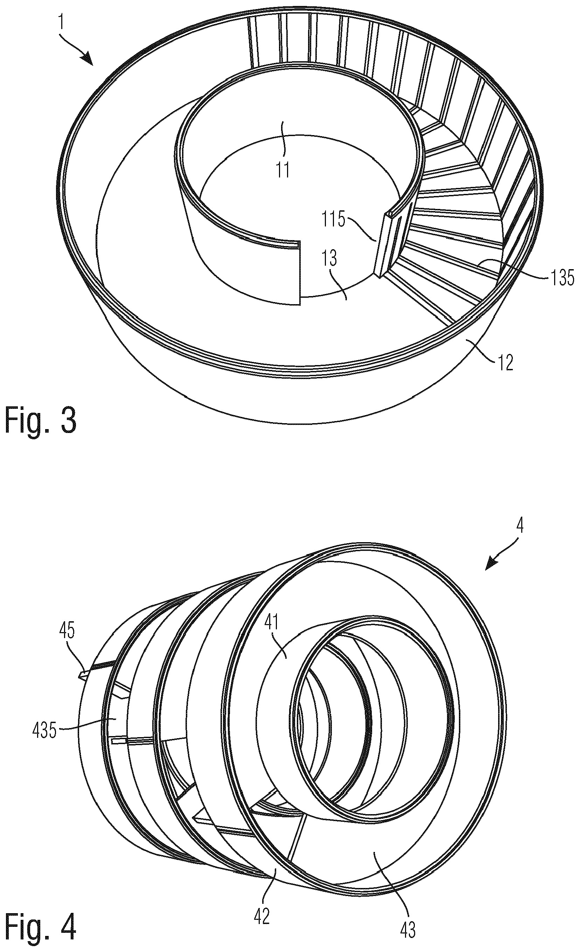

Figur 3 zeigt nochmals ein erstes Modul 1 in der Ansicht. Figur 1 zeigt die innere Seitenfläche 11 und die äußere Seitenfläche 12 sowie beide Seitenfläche verbindende Bodenfläche 13. Ebenfalls dargestellt ist die Öffnung 115, welche die durch die Seitenflächen und die Bodenfläche gebildete Rinne akustisch an den Strömungspfad 55 koppeln, welche im Inneren der inneren Seitenfläche 11 ausgebildet ist.

Figur 3 zeigt weiterhin eine Mehrzahl von Nuten 135, welche sich von der der Rinne zugewandten Seite der inneren Seitenwand 11 über die Innenfläche der Bodenfläche 13 zur Innenseite der äußeren Seitenfläche 12 erstrecken. Diese Nuten 135 sind dazu eingerichtet und bestimmt, ein Trennelement 15 bzw. ein Trennelement 35 oder 45 eines benachbarten Moduls aufzunehmen und so einerseits eine Positionierhilfe zu bieten, um eine vorgebbare Winkelbeziehung zwischen benachbarten Modulen einzuhalten und andererseits die Abdichtung der Trennwand innerhalb des Resonators zu erleichtern oder zu ermöglichen.

Figur 3 zeigt weiter, dass die Mehrzahl von Nuten einen Winkelabstand von etwa 10° zueinander aufweisen, sodass benachbarte Module in einem Raster von 10° zueinander eingesetzt werden können. In einigen Ausführungsformen der Erfindung sind die Nuten nicht über den gesamten Umfang eingebracht, sondern wie in Figur 3 dargestellt vom Beginn der Öffnung 115 bis zu einer Stelle gegenüberliegend der Öffnung 115. Hierdurch kann die Montage benachbarter Module erleichtert sein, weil aufgrund des symmetrischen Aufbaus des ringförmigen Resonators eine Trennwand auf der gegenüberliegenden Seite zu keinem anderen Ergebnis führt.

Figur 4 zeigt beispielhafte vierte ringförmige Module. Auch die vierten ringförmigen Module weisen eine toroidale Grundform auf, welche einen rinnenförmigen, polygonalen Querschnitt mit einer inneren Seitenfläche 41 und einer äußeren Seitenfläche 42 und einer die Seitenflächen 41 und 42 verbindenden Bodenfläche 43 besitzt.

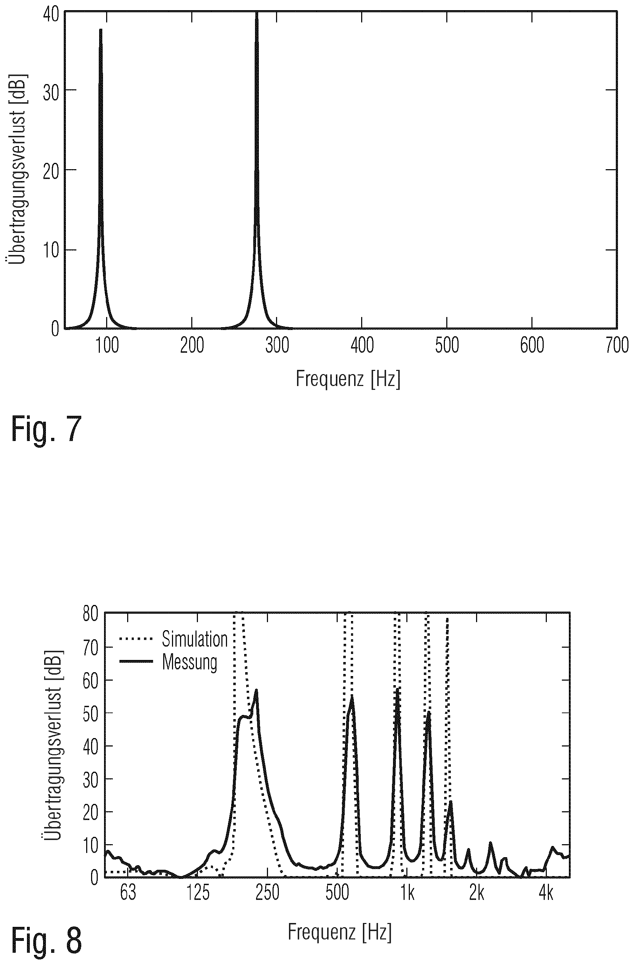

Das vierte ringförmige Modul unterscheidet sich vom ersten ringförmigen Modul dadurch, dass in der inneren Seitenfläche 41 keine Öffnung vorhanden ist. Jedoch befindet sich in der Bodenfläche 43 eine Öffnung 435. Die Öffnung 435 dient dazu, den im vierten ringförmigen Modul 4 ausgebildeten Resonator an einen Resonator anzukoppeln, welcher in einem ersten oder zweiten ringförmigen Modul ausgebildet ist. Hierdurch kann die Resonanzfrequenz weiter verringert werden. Dies wird nachfolgend anhand von Figur 7 näher erläutert. Hierzu kann ein einziges oder auch eine Mehrzahl sequentiell angeordneter vierter ringförmiger Module 4 verwendet werden.

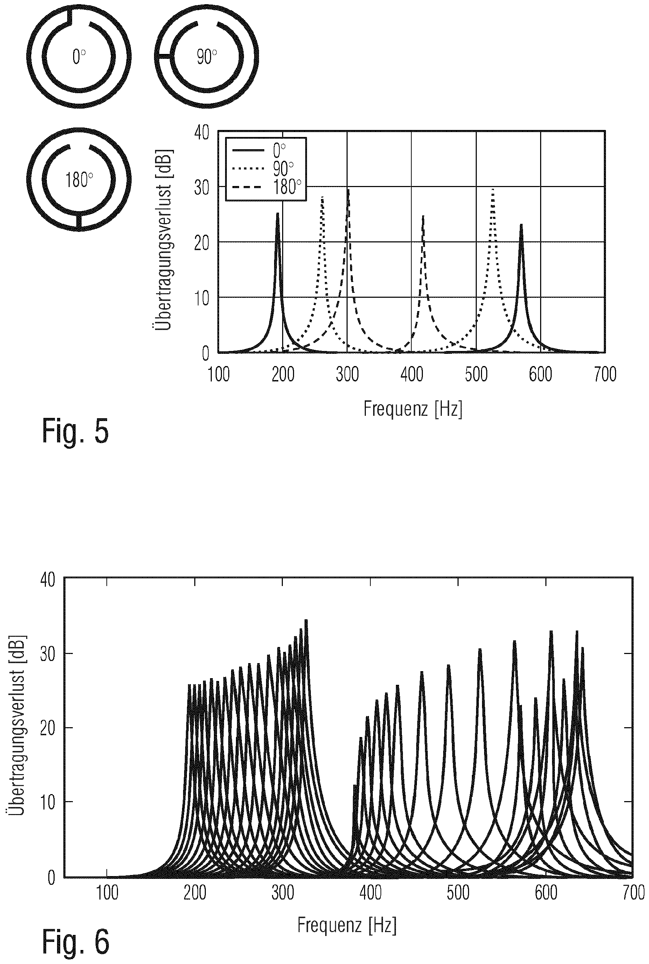

Anhand der Figuren 5 und 6 wird erläutert, wie durch Verändern der Winkelbeziehung benachbarter ringförmiger Module die Resonanzfrequenz verändert und an einen vorgebbaren Anwendungszweck angepasst werden kann. Figur 5 zeigt dabei drei unterschiedliche Positionen einer Trennwand 15 in einem benachbarten ringförmigen Modul 1. Die drei dargestellten Positionen sind in Figur 5 schematisch skizziert. Entweder befindet sich die Trennwand unmittelbar angrenzend an die Öffnung 115. Dies wird als 0°-Richtung bezeichnet. Alternativ kann sich die Trennwand 15 gegenüber der Öffnung 115 befinden. Dies wird als 180°-Richtung bezeichnet. Schließlich zeigt Figur 5 eine 90°-Richtung, welche zwischen den beiden betrachteten Extremen liegt. Wie aus Figur 5 deutlich wird, bildet ein einzelnes ringförmiges Modul 1 bzw. 2 bei Wahl einer 0°-Richtung einen einzelnen Resonator. Wenn das Trennelement 15 in abweichender Stellung eingebracht wird, bildet ein einzelnes ringförmiges Modul zwei Resonatoren aus, welche entweder zwei unterschiedliche Resonanzfrequenzen aufweisen oder die gleiche Resonanzfrequenz besitzen. Das beispielhaft betrachtete ringförmige Modul besitzt einen Innendurchmesser bzw. einen Durchmesser des Strömungspfades 55 von 100 mm. Der Resonator besitzt eine Länge und eine Breite von jeweils etwa 40 mm.

In Figur 5 ist weiterhin der Übertragungsverlust in dB gegen die Frequenz in Hz aufgetragen. Dargestellt sind berechnete Werte für den Übertragungsverlust bzw. die Schalldämpfung in Abhängigkeit der Frequenz für unterschiedliche Positionen des Trennelementes. Wie Figur 5 zeigt, wird bei einer Orientierung von 0° die tiefste mögliche Resonanzfrequenz von etwa 190 Hz erhalten. Darüber hinaus existiert eine Oberschwingung bei einer um einen Faktor 4 höheren Frequenz. Bei Einbau des Trennelementes in 90°-Richtung entstehen zwei unterschiedlich lange Resonatoren, sodass der Rohrschalldämpfer zwei Resonanzfrequenzen bei etwa 220 Hz und etwa 580 Hz besitzt. Bei einem Einbau des Trennelementes in 180°-Richtung entstehen zwei gleich lange Resonatorkammern mit einer Resonanzfrequenz von ca. 300 Hz.

Figur 6 zeigt nochmals den Übertragungsverlust auf der Ordinate gegen die Frequenz auf der Abszisse in Abhängigkeit des Drehwinkels des Trennelementes, wobei nicht nur die in Figur 5 dargestellten drei Drehwinkel dargestellt sind, sondern sämtliche möglichen Drehwinkel zwischen 0° und 180° im Abstand von 10°. Aus Figur 6 ist gut erkennbar, wie sich einerseits die Resonanzfrequenz mit zunehmendem Drehwinkel zu höheren Frequenzen hin verschiebt und gleichzeitig die Absorptionslinie breiter wird, sodass der Rohrschalldämpfer nicht nur bei einer einzigen, genau definierten Frequenz eine hohe Geräuschdämpfung erreicht, sondern zunehmend breitere Absorptionsbanden zeigt, welche eine breitbandige Schallminderung bewirken können.

Anhand der Figur 7 wird nochmals der Übertragungsverlust in dB auf der Ordinate und die Frequenz in Hz auf der Abszisse dargestellt, und zwar einmal für einen einfachen Rohrschalldämpfer mit einem einzigen ersten bzw. zweiten Modul, bei welchem das Trennelement in 0°-Richtung eingreift. Darüber hinaus enthält der in Figur 7 visualisierte Rohrschalldämpfer ein viertes Modul, welches der Resonatorkammer zusätzliche Länge hinzufügt. Hierdurch ergibt sich eine tiefstmögliche Resonanzfrequenz von 93 Hz. Durch Hinzufügen weiterer vierter Module, welche jeweils einen Durchbruch zum vorangegangenen Modul aufweisen, kann die Resonanzfrequenz weiter abgesenkt werden.

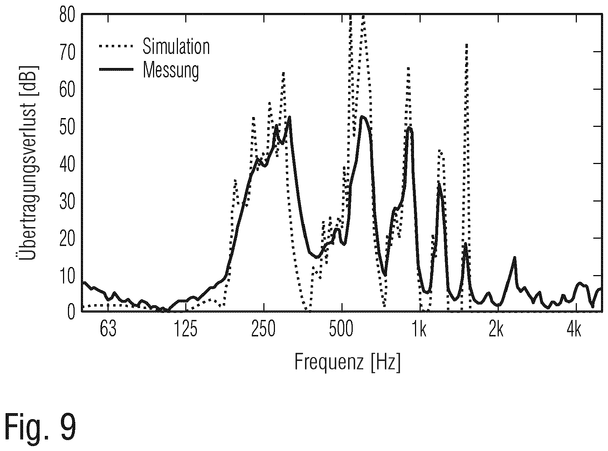

Anhand der Figuren 8 und 9 wird nochmals der Übertragungsverlust eines Rohrschalldämpfers dargestellt, welcher ein einziges drittes ringförmiges Modul, ein einziges zweites ringförmiges Modul sowie 15 erste ringförmige Module aufweist. In Figur 8 besitzen sämtliche Module dieselbe Winkelbeziehung zueinander, d. h. das Trennelement ist jeweils in 0°-Richtung orientiert. In Figur 9 befindet sich jedes Trennelement in einer anderen Winkelstellung, sodass ein Winkelbereich von 0° bis 180° äquidistant abgedeckt wird. Dargestellt ist jeweils die simulierte Durchgangsdämpfung sowie die gemessene Durchgangsdämpfung.

Aus Figur 8 und 9 ist eine gute Übereinstimmung von Messwerten und Simulation ersichtlich, sodass das Verhalten des Rohrschalldämpfers bereits vor dessen Endmontage mit guter Genauigkeit vorhersagbar ist. Dies kann bei der Auswahl der in einen Rohrschalldämpfer einzusetzenden ringförmigen Module und deren Winkelbeziehung hilfreich sein. Weiterhin zeigen die Figuren 8 und 9, wie durch einfache Änderung der Winkelbeziehung bei der Endmontage des Rohrschalldämpfers das Absorptionsverhalten angepasst werden kann, und zwar einerseits der Übertragungsverlust und andererseits die Resonanzfrequenz.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Rohrschalldämpfer (5), aufweisend zumindest einen Strömungspfad (55), welcher von einem ersten Ende (51) des Rohrschalldämpfers zu einem zweiten Ende (52) des Rohrschalldämpfers (5) verläuft und zumindest einen Resonator, welcher mit dem Strömungspfad gekoppelt ist, wobei der Rohrschalldämpfer in zumindest einem Abschnitt aus einer Mehrzahl von ringförmigen Modulen (1, 2, 3, 4) zusammengesetzt ist, welche jeweils einen Längsabschnitt des Rohrschalldämpfers (5) bilden, wobei zumindest ein erstes ringförmiges Modul (1) eine toroidale Grundform aufweist, welche einen rinnenförmigen, polygonalen Querschnitt mit einer inneren Seitenfläche (11) und einer äußeren Seitenfläche (12) und eine die Seitenflächen (11, 12) verbindenden Bodenfläche (13) besitzt, wobei die innere Seitenfläche (11) einen Teil der Wandung des Strömungspfades (55) bildet und in der inneren Seitenfläche (11) eine Öffnung (115) angeordnet ist **dadurch gekennzeichnet, dass**
zumindest eines der ringförmigen Module (1, 3, 4) weiterhin ein Trennelement (15, 35, 45) aufweist, welches auf der den Seitenflächen (11, 12) gegenüberliegenden Seite der Bodenfläche (13) angeordnet ist.

2. Rohrschalldämpfer nach Anspruch 1, weiterhin enthaltend zumindest ein zweites ringförmiges Modul (2), welches eine toroidale Grundform aufweist, welche einen rinnenförmigen, polygonalen Querschnitt mit einer inneren Seitenfläche (21) und einer äußeren Seitenfläche (22) und eine die Seitenflächen (21, 22) verbindenden Bodenfläche (23) besitzt, wobei in der inneren Seitenfläche (21) eine Öffnung (215) angeordnet ist und ein Längsabschnitt der inneren Seitenfläche (21) eine Einsteckmuffe (26) zur Befestigung einer Rohrleitung bildet.

3. Rohrschalldämpfer nach einem der Ansprüche 1 bis 2, weiterhin enthaltend zumindest ein drittes ringförmiges Modul (3), welches eine toroidale Grundform aufweist, welche einen L-förmigen Querschnitt mit einer inneren Seitenfläche (31) und einer hierzu orthogonalen Bodenfläche (33) besitzt, wobei zumindest ein Längsabschnitt der inneren Seitenfläche (31) dazu eingerichtet ist, in eine Einsteckmuffe einer Rohrleitung eingeführt zu werden.

4. Rohrschalldämpfer nach einem der Ansprüche 1 bis 3, weiterhin enthaltend zumindest ein viertes ringförmiges Modul (4), welches eine toroidale Grundform aufweist, welche einen rinnenförmigen, polygonalen Querschnitt mit einer inneren Seitenfläche (41) und einer äußeren Seitenfläche (42) und einer die Seitenflächen (41, 42) verbindenden Bodenfläche (43) besitzt, wobei die innere Seitenfläche (41) einen Teil der Wandung des Strömungspfades (55) bildet und in der Bodenfläche (43) eine Öffnung (435) angeordnet ist.

5. Rohrschalldämpfer nach einem der Ansprüche 1 bis 4,
**dadurch gekennzeichnet, dass** der rinnenförmige, polygonale Querschnitt viereckig ist und/oder dass die ringförmigen Module (1, 2, 3, 4) an ihren Kontaktflächen ein Nut- und Feder-System aufweisen und/oder
dass zwischen die ringförmigen Module (1, 2, 3, 4) an ihren Kontaktflächen ein Dichtmaterial eingesetzt ist.

6. Rohrschalldämpfer nach einem der Ansprüche 1 bis 5,
**dadurch gekennzeichnet, dass** an der inneren Seitenfläche (11) und/oder der äußeren Seitenfläche (12) und/oder der Bodenfläche (13) eine Nut (135) zur Aufnahme des Trennelementes (15) eines benachbarten Moduls angeordnet ist.

7. Rohrschalldämpfer nach einem der Ansprüche 1 bis 6,
**dadurch gekennzeichnet, dass** zumindest ein ringförmiges Modul (1, 2, 3, 4) in einem Spritzguss- oder Druckgussverfahren hergestellt ist oder
dass zumindest ein ringförmiges Modul (1, 2, 3, 4) ein Polymer oder ein Metall oder eine Legierung enthält oder daraus besteht.

8. Rohrschalldämpfer nach einem der Ansprüche 1 bis 7,
**dadurch gekennzeichnet, dass** dieser zwischen 2 und 30 erste ringförmige Module (1) enthält und/oder dass dieser ein zweites ringförmiges Modul (2) enthält und/oder
dass dieser ein drittes ringförmiges Modul (3) enthält und/oder
dass dieser zwischen 1 und 30 vierte ringförmige Module (1) enthält.

9. Lüftungsanlage oder Feuerstätte mit einem Rohrschalldämpfer nach einem der Ansprüche 1 bis 8.

10. Bausatz zur Herstellung eines Rohrschalldämpfers nach einem der Ansprüche 1 bis 8, wobei der Bausatz zumindest eine Mehrzahl erster ringförmiger Module (1) enthält.

11. Bausatz nach Anspruch 10, weiterhin enthaltend zumindest ein zweites ringförmiges Modul (2) und/oder zumindest ein drittes ringförmiges Modul (3) und/oder zumindest ein viertes ringförmiges Modul (4).

12. Verfahren zur Herstellung eines Rohrschalldämpfers nach einem der Ansprüche 1 bis 8, mit folgenden Schritten:
Bereitstellen einer Mehrzahl von ersten, zweiten, und dritten ringförmigen Modulen (1, 2, 3);
Auswählen von zumindest zwei ringförmigen Modulen (1, 2, 3);
Stapeln der ausgewählten ringförmigen Module (1, 2, 3), so dass diese jeweils einen Längsabschnitt des Rohrschalldämpfers (5) bilden.

13. Verfahren nach Anspruch 12, **dadurch gekennzeichnet, dass** die Mehrzahl ringförmigen Modulen (1, 2, 3) so gestapelt wird, dass am Anfang und am Ende des Rohrschalldämpfers (5) ein zweites bzw. ein drittes ringförmiges Modul (2, 3) angeordnet wird und dazwischen zumindest ein erstes ringförmiges Modul (1) angeordnet wird.

14. Verfahren nach einem der Ansprüche 12 oder 13, **dadurch gekennzeichnet, dass** weiterhin zumindest ein viertes ringförmiges Modul bereitgestellt und ausgewählt wird und/oder
dass vor dem Stapeln der ausgewählten ringförmigen Module jeweils ein relativer Drehwinkel ausgewählt wird.

15. Verfahren nach einem der Ansprüche 12 bis 14, **dadurch gekennzeichnet, dass** benachbarte ringförmige Module bei der Montage miteinander verschweißt oder verklebt werden und/oder dass zwischen die Kontaktflächen benachbarter Module (1, 2, 3, 4) ein Dichtmaterial eingebracht wird.
